(19) Europäisches Patentamt
European Patent Office
Office européen des brevets

(11) **EP 3 082 365 A1**

(12) **EUROPEAN PATENT APPLICATION**
published in accordance with Art. 153(4) EPC

(43) Date of publication:
**19.10.2016 Bulletin 2016/42**

(51) Int Cl.:
***H04W 48/08*** (2009.01)

(21) Application number: **14869072.0**

(86) International application number:
**PCT/CN2014/080131**

(22) Date of filing: **17.06.2014**

(87) International publication number:
**WO 2015/085743 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.12.2013 CN 201310667136**

(71) Applicant: **ZTE Corporation**
**Shenzhen, Guangdong 518057 (CN)**

(72) Inventor: **ZHAN, Jianming**
**Shenzhen**
**Guangdong 518057 (CN)**

(74) Representative: **Deambrogi, Edgardo et al**
**Jacobacci & Partners S.p.A.**
**Corso Emilia 8**
**10152 Torino (IT)**

(54) **METHOD FOR IMPLEMENTING SOFT HANDOVER OF USER EQUIPMENT, AND RADIO NETWORK CONTROLLER**

(57)    Provided are a method and a Radio Network Controller (RNC) for implementing soft handover of User Equipment (UE). In the method: an RNC sends, to the UE, a Measurement Control (MC) message for soft handover; and during soft handover of the UE, the RNC receives two MC event reports reported by the UE according to the MC message, and performs a soft handover procedure of the UE between a macro cell and a Low Power Node (LPN) cell according to the two MC event reports. According to the solution, the soft handover procedure of the UE between the macro cell and the LPN cell is implemented on the basis of the two soft handover MC event reports reported by the UE, so that waste of a processing resource of the macro cell in a Universal Mobile Telecommunications System (UMTS) Heterogeneous network (Hetnet) can be avoided, uplink processing performance of the network can be improved. In addition, an Iub transmission bandwidth of the macro cell can also be saved. Along with gradual increase of small cells, the bandwidth can be saved more considerably, and influence on capacity configuration changing of an Iub transmission network is avoided.

```
           ┌─────────┐
           │  Start  │
           └────┬────┘
                │
   ┌────────────▼──────────────────┐
   │ An RNC sends an MC message for │─── S101
   │ soft handover to the UE        │
   └────────────┬──────────────────┘
                │
   ┌────────────▼──────────────────────┐
   │ During soft handover of the UE,    │
   │ the RNC receives two MC event      │
   │ reports reported by the UE         │─── S102
   │ according to the MC message, and   │
   │ performs a soft handover procedure │
   │ of the UE between a macro cell and │
   │ an LPN cell according to the two   │
   │ MC event reports                   │
   └────────────┬──────────────────────┘
                │
           ┌────▼────┐
           │   End   │
           └─────────┘
```

**Fig. 2**

EP 3 082 365 A1

**EP 3 082 365 A1**

**Description**

**Technical Field**

The present disclosure relates to the technical field of communication, and in particular to a method and an RNC for implementing soft handover of UE.

**Background**

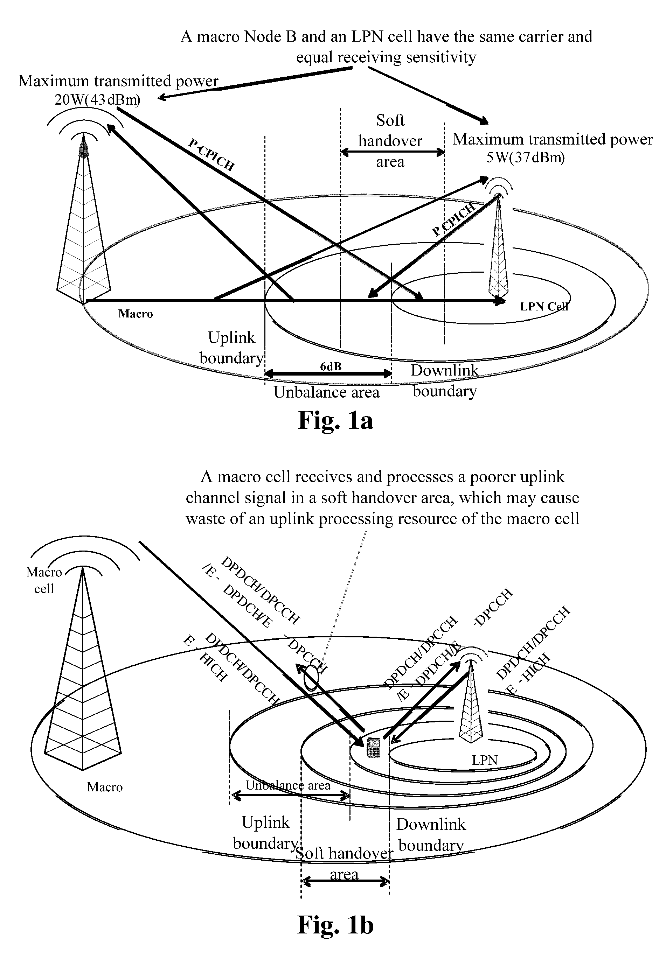

In practical deployment of a Universal Mobile Telecommunications System (UMTS) Heterogeneous network (Hetnet), a downlink coverage boundary and an uplink coverage boundary between a macro cell and a Low Power Node (LPN) cell are not located at the same place (that is, the uplink boundaries and the downlink boundaries are different), that is, there exists an uplink and downlink unbalance area. However, a soft handover procedure measurement report reported by a mobile phone is triggered by received downlink signal strength, so that there may be a difference between the uplink and downlink unbalance area and a soft handover area, referring to Fig. 1a, which is a diagram of uplink and downlink unbalance of a UMTS Hetnet. Such a difference may cause poor quality of an uplink signal received by the macro cell from UE in the soft handover area and waste of an uplink resource of the macro cell, thereby influencing uplink processing performance of the macro cell. As shown in Fig. 1b, which is a diagram of uplink and downlink channels between UE in a soft handover area, of which an Enhanced Dedicated Channel (E-DCH) serving cell is an LPN cell, and each of a macro cell and the LPN cell, when a relatively large number of LPN cells are deployed in the macro cell, more uplink processing resources of the macro cell may be wasted due to the fact that the macro cell receives and processes relatively poorer uplink Dedicated Physical Data Channel (DPDCH) /Dedicated Physical Control Channel (DPCCH) /Enhanced-DPDCH (E-DPDCH) /Enhanced-DPCCH (E-DPCCH) signal in the soft handover area.

**Summary**

The embodiments of the present disclosure provide a method and an RNC for implementing soft handover of UE, which improve uplink performance of a UMTS Hetnet.

According to one aspect of the embodiments of the present disclosure, a method for implementing soft handover of UE is provided, which may include that: an RNC sends, to the UE, a Measurement Control (MC) message for soft handover; and during soft handover of the UE, the RNC receives two MC event reports reported by the UE according to the MC message, and performs a soft handover procedure of the UE between a macro cell and an LPN cell according to the two MC event reports.

A current serving cell of the UE may be the macro cell, and the MC message sent to the UE by the RNC may include a Cell Individual Offset (CIO) parameter of an adjacent cell of the LPN cell deployed in the macro cell.

The current serving cell of the UE may be the LPN cell, and the MC message sent to the UE by the RNC may include a CIO parameter of an adjacent cell of the macro cell.

When the UE moves from the macro cell to the LPN cell, the step that the RNC receives the two MC event reports reported by the UE according to the MC message and performs the soft handover procedure of the UE between the macro cell and the LPN cell according to the two MC event reports may include that: the RNC receives an MC event report of Event1a reported by the UE, and adds the LPN cell into an active set; the RNC receives an MC event report of Event1d reported by the UE, and changes one or more serving cells of one or more uplink and downlink channels of the macro cell into the LPN cell; and the RNC initiates an active set update procedure to the UE to delete the macro cell from the active set, and deletes a Radio Link (RL) with the macro cell.

The step that the RNC receives the MC event report of Event1a reported by the UE and adds the LPN cell into the active set may include that: the RNC receives the MC event report of Event1a reported by the UE; the RNC sets up an RL with the LPN cell according to the MC event report of Event1a; and the RNC initiates the active set update procedure to the UE to add the LPN cell into the active set.

The step that the RNC receives the MC event report of Event1d reported by the UE and changes one or more serving cells of one or more uplink and downlink channels of the macro cell into the LPN cell may include that: the RNC receives the MC event report of Event1d reported by the UE; the RNC implements changing of a serving cell of a High Speed-Downlink Shared Channel (HS-DSCH) into the LPN cell according to the MC event report of Event1d by initiating an RL reconfiguration procedure with the macro cell and the LPN cell and a physical channel reconfiguration procedure with the UE; and the RNC implements changing of a serving cell of an uplink E-DCH into the LPN cell by a Radio Bearer (RB) reconfiguration procedure with the UE.

When the UE moves from the LPN cell to the macro cell, the step that the RNC receives the two MC event reports reported by the UE according to the MC message and performs the soft handover procedure of the UE between the macro cell and the LPN cell according to the two MC event reports may include that: the RNC receives the MC event

2

report of Event1d reported by the UE, and adds the macro cell into an active set; the RNC changes one or more serving cells of one or more uplink and downlink channels of the LPN cell into the macro cell; and the RNC receives an MC event report of Event1b reported by the UE, deletes the LPN cell from the active set, and deletes an RL with the LPN cell.

The step that the RNC receives the MC event report of Event1d reported by the UE and adds the macro cell into the active set may include that: the RNC receives the MC event report of Event1d reported by the UE; the RNC sets up an RL with the macro cell according to the MC event report of Event1d; and the RNC initiates an active set update procedure to the UE to add the macro cell into the active set.

The step that the RNC changes the one or more serving cells of one or more uplink and downlink channels of the LPN cell into the macro cell may include that: the RNC implements changing of a serving cell of an HS-DSCH into the macro cell by initiating an RL reconfiguration procedure with the macro cell and the LPN cell and a physical channel reconfiguration procedure with the UE, and implements changing of a serving cell of an E-DCH into the macro cell by an RB reconfiguration procedure with the UE.

According to the other aspect of the embodiments of the present disclosure, an RNC for implementing soft handover of UE is further provided, which may include: a sending component, configured to send, to the UE, an MC message for soft handover; and a handover component, configured to, during soft handover of the UE, receive two MC event reports reported by the UE according to the MC message, and perform a soft handover procedure of the UE between a macro cell and an LPN cell according to the two MC event reports.

A current serving cell of the UE may be the macro cell, and the MC message sent to the UE by the RNC may include a CIO parameter of an adjacent cell of the LPN cell deployed in the macro cell.

The current serving cell of the UE may be the LPN cell, and the MC message sent to the UE by the RNC may include a CIO parameter of an adjacent cell of the macro cell.

The handover component may include: a first receiving processing element, configured to receive an MC event report of Event1a reported by the UE, and add the LPN cell into an active set; a second receiving processing element, configured to receive an MC event report of Event1d reported by the UE, and change one or more serving cells of one or more uplink and downlink channels of the macro cell into the LPN cell; and an updating processing element, configured to initiate an active set update procedure to the UE to delete the macro cell from the active set, and delete an RL with the macro cell.

The first receiving processing element may further be configured to receive the MC event report of Event1a reported by the UE; set up an RL with the LPN cell according to the MC event report of Event1a; and initiate an active set update procedure to the UE to add the LPN cell into the active set.

The second receiving processing element may further be configured to receive the MC event report of Event1d reported by the UE; implement changing of a serving cell of an HS-DSCH into the LPN cell according to the MC event report of Event1d by initiating an RL reconfiguration procedure with the macro cell and the LPN cell and a physical channel reconfiguration procedure with the UE; and implement changing of a serving cell of an uplink E-DCH into the LPN cell by an RB reconfiguration procedure with the UE.

The handover component may include: a third receiving processing element, configured to receive the MC event report of Event1d reported by the UE, and add the macro cell into an active set; a changing element, configured to change one or more serving cells of one or more uplink and downlink channels of the LPN cell into the macro cell; and a fourth receiving processing element, configured to receive an MC event report of Event1b reported by the UE, delete the LPN cell from the active set, and delete an RL with the LPN cell.

The third receiving processing element may further be configured to receive the MC event report of Event1d reported by the UE; set up an RL with the macro cell according to the MC event report of Event1d; and initiate an active set update procedure to the UE to add the macro cell into the active set.

The changing element may further be configured to implement changing of a serving cell of an HS-DSCH into the macro cell by initiating an RL reconfiguration procedure with the macro cell and the LPN cell and a physical channel reconfiguration procedure with the UE; and implement changing of a serving cell of an E-DCH into the macro cell by an RB reconfiguration procedure with the UE.

According to the method and RNC for implementing soft handover of the UE provided by the embodiments of the present disclosure, the soft handover procedure of the UE between the macro cell and the LPN cell is implemented on the basis of the two soft handover MC event reports reported by the UE, so that waste of a processing resource of the macro cell in the UMTS Hetnet can be avoided, uplink processing performance of the network can be improved. In addition, an Iub transmission bandwidth of the macro cell can also be saved. Along with gradual increase of small cells, the bandwidth can be saved more considerably, and influence on capacity configuration changing of an Iub transmission network is avoided.

**Brief Description of the Drawings**

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:

Fig. 1a is a diagram of uplink and downlink unbalance of a UMTS Hetnet according to a related art;
Fig. 1b is a diagram of uplink and downlink channels between UE in a soft handover area, of which a serving cell of an E-DCH is an LPN cell, and each of a macro cell and the LPN cell;
Fig. 2 is a flowchart of a method for implementing soft handover of UE according to an embodiment of the present disclosure;
Fig. 3 is a diagram of a soft handover event and soft handover area in a procedure of movement of UE from a macro cell to an LPN cell according to an embodiment of the present disclosure;
Fig. 4 is a flowchart of processing soft handover event Event1a in a procedure of movement of UE from a macro cell to an LPN cell according to an embodiment of the present disclosure;
Fig. 5 is a flowchart of processing soft handover event Event1d in a procedure of movement of UE from a macro cell to an LPN cell according to an embodiment of the present disclosure;
Fig. 6 is a diagram of a soft handover event and soft handover area in a procedure of movement of UE from an LPN cell to a macro cell according to an embodiment of the present disclosure;
Fig. 7 is a flowchart of processing soft handover event Event1d in a procedure of movement of UE from an LPN cell to a macro cell according to an embodiment of the present disclosure;
Fig. 8 is a flowchart of processing soft handover event Event1b in a procedure of movement of UE from an LPN cell to a macro cell according to an embodiment of the present disclosure;
Fig. 9 is a diagram of an uplink and downlink service connecting relationship between UE and a macro cell when the UE is in the macro cell but is not in an unbalance area during initial movement of the UE from the macro cell to an LPN cell according to an embodiment of the present disclosure.
Fig. 10 is a diagram of an uplink and downlink service connecting relationship between UE and each of a macro cell and an LPN cell when the UE is in both the macro cell and an unbalance area in a procedure of movement of the UE from the macro cell to the LPN cell according to an embodiment of the present disclosure;
Fig. 11 is a diagram of an uplink and downlink service connecting relationship between UE and an LPN cell when the UE is in the LPN cell after movement of the UE from a macro cell to the LPN cell according to an embodiment of the present disclosure;
Fig. 12 is a diagram of an uplink and downlink service connecting relationship between UE and an LPN cell when the UE is in the LPN cell during initial movement of the UE from the LPN cell to a macro cell according to an embodiment of the present disclosure;
Fig. 13 is a diagram of an uplink and downlink service connecting relationship between UE and each of a macro cell and an LPN cell when the UE is in both the macro cell and an unbalance area in a procedure of movement of the UE from the LPN cell to the macro cell according to an embodiment of the present disclosure;
Fig. 14 is a diagram of an uplink and downlink service connecting relationship between UE and a macro cell when the UE is in the macro cell but is not in an unbalance area after movement of the UE from an LPN cell to the macro cell according to an embodiment of the present disclosure;
Fig. 15 is a diagram of function components of an RNC for implementing soft handover of UE according to an embodiment of the present disclosure;
Fig. 16 is a structure diagram of a handover component in an RNC for implementing soft handover of UE according to an embodiment of the present disclosure; and
Fig. 17 is another structure diagram of a handover component in an RNC for implementing soft handover of UE according to an embodiment of the present disclosure.

## Detailed Description of the Embodiments

In order to make the technical solutions of the embodiments of the present disclosure clearer, further descriptions will be made below with reference to the drawings. It should be understood that specific embodiments described here are only adopted to explain the present disclosure and not intended to limit the present disclosure. It is important to note that the embodiments in the present disclosure and characteristics in the embodiments may be combined under the condition of no conflicts.

A major solution of the embodiments of the present disclosure is: a soft handover event procedure is redefined, and an MC message for soft handover is sent to UE through an RNC; and during soft handover of the UE, the RNC receives two MC event reports reported by the UE according to the MC message, and performs the soft handover procedure of the UE between a macro cell and an LPN cell according to the two MC event reports, so as to avoid waste of a processing resource of a macro cell in a UMTS Hetnet and improve uplink processing performance of the network.

Related channels involved in the embodiments of the present disclosure include:

Primary Common Pilot Channel (P-CPICH);
Primary Common Control Physical Channel (P-CCPCH);
Primary Synchronization Channel (P-SCH);
Secondary Synchronization Channel (S-SCH);
High Speed Downlink Shared Channel (HS-DSCH);
Dedicated Physical Control Channel (DPCCH);
Dedicated Physical Data Channel (DPDCH);
Enhanced Dedicated Channel (E-DCH);
E-DCH Dedicated Physical Control Channel (E-DPCCH);
E-DCH Dedicated Physical Data Channel (E-DPDCH);
E-DCH Hybrid Automatic Repeat Request Indicator Channel (E-HICH);
E-DCH Relative Grant Channel (E-RGCH);
E-DCH Absolute Grant Channel (E-AGCH);
High Speed Dedicated Physical Control Channel (HS-DPCCH);
High Speed Physical Downlink Shared Channel (HS-PDSCH); and
High Speed Shared Control Channel (HS-SCCH).

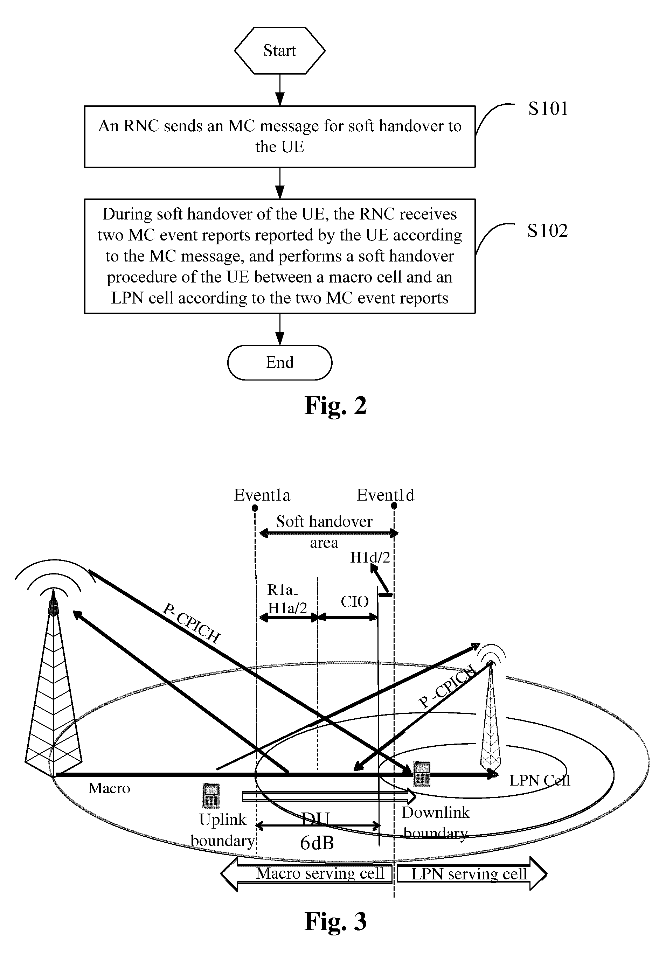

As shown in Fig. 2, an embodiment of the present disclosure discloses a method for implementing soft handover of UE, which includes:

Step S101: an RNC sends an MC message for soft handover to the UE.

In a UMTS Hetnet, a soft handover procedure of the UE may include: a soft handover procedure of movement of the UE from a macro cell to an LPN cell, and a soft handover procedure of movement of the UE from the LPN cell to the macro cell.

When the UE moves from the macro cell to the LPN cell, a current serving cell of the UE is the macro cell, and the MC message sent to the UE by the RNC includes a CIO parameter of an adjacent cell of the LPN cell deployed in the macro cell. When the UE moves from the LPN cell to the macro cell, a current serving cell of the UE is the LPN cell, and the MC message sent to the UE by the RNC includes a CIO parameter of an adjacent cell of the macro cell.

Step S102: during soft handover of the UE, the RNC receives two MC event reports reported by the UE according to the MC message, and performs a soft handover procedure of the UE between a macro cell and an LPN cell according to the two MC event reports.

In order to improve uplink performance of the UMTS Hetnet, the soft handover event procedure is redefined in the embodiment, so that the RNC may implement the soft handover procedure of the UE between the macro cell and the LPN cell on the basis of the two soft handover MC event reports reported by the UE, and waste of a processing resource of the macro cell in the UMTS Hetnet may also be avoided.

For the first soft handover procedure, when the UE moves from the macro cell to the LPN cell, the process that the RNC receives the two MC event reports reported by the UE according to the MC message and performs the soft handover procedure of the UE between the macro cell and the LPN cell according to the two MC event reports is implemented as follows:

at first, the RNC receives an MC event report of Event1a reported by the UE, and after receiving the MC event report of Event1a reported by the UE, the RNC sets up an RL with the LPN cell, initiates an active set update procedure to the UE to add the LPN cell into an active set;

then, the RNC receives an MC event report of Event1d reported by the UE, and after receiving the MC event report of Event1d reported by the UE, the RNC implements changing of a serving cell of an HS-DSCH into the LPN cell by initiating an RL reconfiguration procedure to the macro cell and the LPN cell and a physical channel reconfiguration procedure with the UE, and implements changing of a serving cell of an E-DCH into the LPN cell by an RB reconfiguration procedure with the UE; and

finally, the RNC initiates the active set update procedure to the UE to delete the macro cell from the active set, and initiates an RL deletion procedure to the macro cell.

In such a manner, the soft handover procedure of the UE from the macro cell to the LPN cell is implemented.

For the second soft handover procedure, when the UE moves from the LPN cell to the macro cell, the process that the RNC receives the two MC event reports reported by the UE according to the MC message and performs the soft handover procedure of the UE between the macro cell and the LPN cell according to the two MC event reports is implemented as follows:

at first, the RNC receives the MC event report of Event1d reported by the UE, sets up an RL with the macro cell after receiving the MC event report of Event1d reported by the UE, initiates an active set update procedure to the UE to add the macro cell into an active set;

then, the RNC implements changing of a serving cell of an HS-DSCH into the macro cell by initiating an RL reconfiguration procedure to the macro cell and the LPN cell and a physical channel reconfiguration procedure with the UE, and implements changing of a serving cell of an E-DCH into the macro cell by an RB reconfiguration procedure with the UE;

next, the RNC receives an MC event report of Event1b reported by the UE, initiates an active set update procedure to the UE after receiving the MC event report of Event1b reported by the UE, to delete the LPN cell from the active set; and

finally, the RNC initiates an RL deletion procedure to the LPN cell.

In such a manner, the soft handover procedure of the UE from the LPN cell to the macro cell is implemented.

The solution of the embodiment will be elaborated below specifically with a movement procedure of UE from a macro cell to an LPN cell and a movement procedure of the UE from the LPN cell to the macro cell in detail respectively.

1: the UE moves from the macro cell to the LPN cell.

In a soft handover procedure of movement of the UE from the macro cell to the LPN cell, only MC event reports of Event1a and Event1d are generated, and an MC event report of Event1b will not be generated, referring to Fig. 3, Fig. 3 is a diagram of a soft handover event and soft handover area in a procedure of movement of UE from a macro cell to an LPN cell according to an embodiment of the present disclosure. A specific process is implemented as follows.

Step 1: a current serving cell of the UE is the macro cell, and the RNC sends an MC message to the UE, wherein the MC message is configured in a manner as follows:

newIntraFreqCellList in the MC message includes a CIO parameter of an adjacent cell of the LPN cell deployed in the macro cell, and a calculation formula for the CIO parameter is:

$CIO=DU-(R1a-H1a/2)$, a unit being dB; and

in the formula, DU is a magnitude of a received signal quality difference of the UE between an uplink boundary and a downlink boundary, i.e. a size of an uplink and downlink unbalance area of the UE, and a value range of DU is $4\sim7$dB, and is determined according to a practical transmitted power difference and receiving sensitivity difference of the macro cell and the LPN cell in a UMTS Hetnet.

In the formula, parameters R1a and H1a are soft handover parameters between cells, and in general, R1a-H1a/2<DU(dB). For example, when DU is 6dB, $CIO=6-(R1a-H1a/2)$, and conventional Event1a has measurement report parameters R1a=3dB and H1a=0dB.

In the MC message, parameters R1a and H1a of an Information Element (IE) of which an intra-frequency event identity is equal to 1a in intra-frequency measurement reporting criteria IEs are set to be the same as soft handover parameters R1a and H1a between the macro cells respectively.

A use CIO parameter in the MC message is set to be FALSE, and then the MC event report of Event1d of the UE is judged with reference to practical downlink signal strength quality without considering the CIO parameter; and parameter H1d in the MC message is set to be the same as soft handover parameter H1d between the macro cells, and for example, is configured to be $1\sim2$dB (to avoid a ping-pong effect of handover).

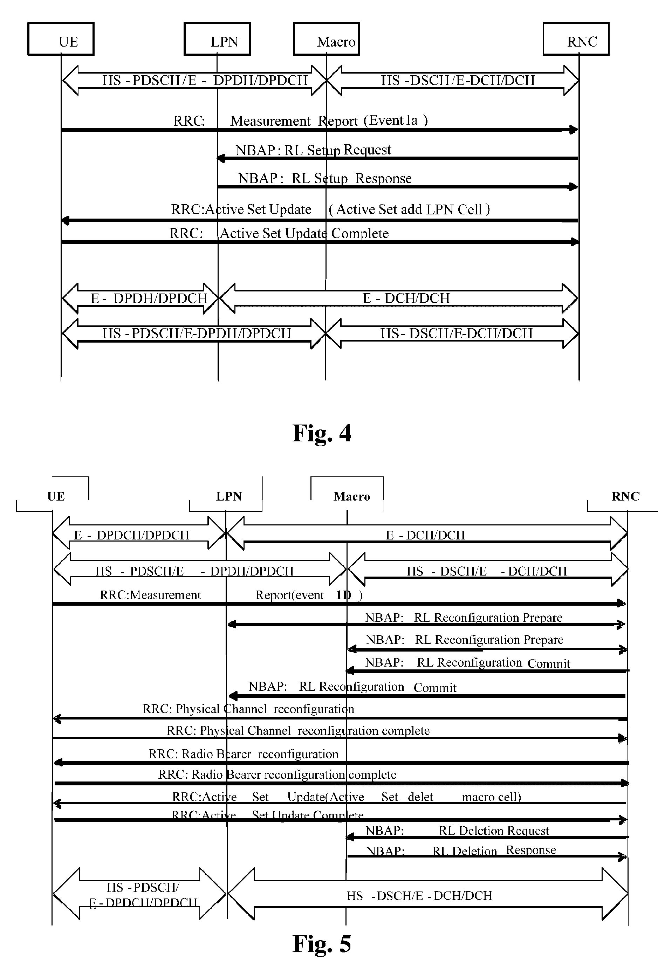

Step 2: the RNC initiates an RL setup procedure to the LPN cell after receiving the MC event report of Event1a, and then the RNC initiates an active set update procedure to the UE to add the LPN cell into an active set, a message flowchart being shown in Fig. 4.

Step 3: after receiving the MC event report of Event1d, the RNC implements changing of a serving cell of an HS-DSCH by initiating an RL reconfiguration procedure to the macro cell and the LPN cell and a physical channel reconfiguration procedure with the UE, and implements changing of a serving cell of an E-DCH by an RB reconfiguration procedure with the UE, so that the serving cell of the HS-DSCH is changed into the LPN cell, and the serving cell of the E-DCH is changed into the LPN cell; and then the RNC initiates an active set update procedure to the UE, and deletes the macro cell from the active set, so that the macro cell may be deleted from the active set in a procedure of processing Event1d, a message flowchart being shown in Fig. 5.

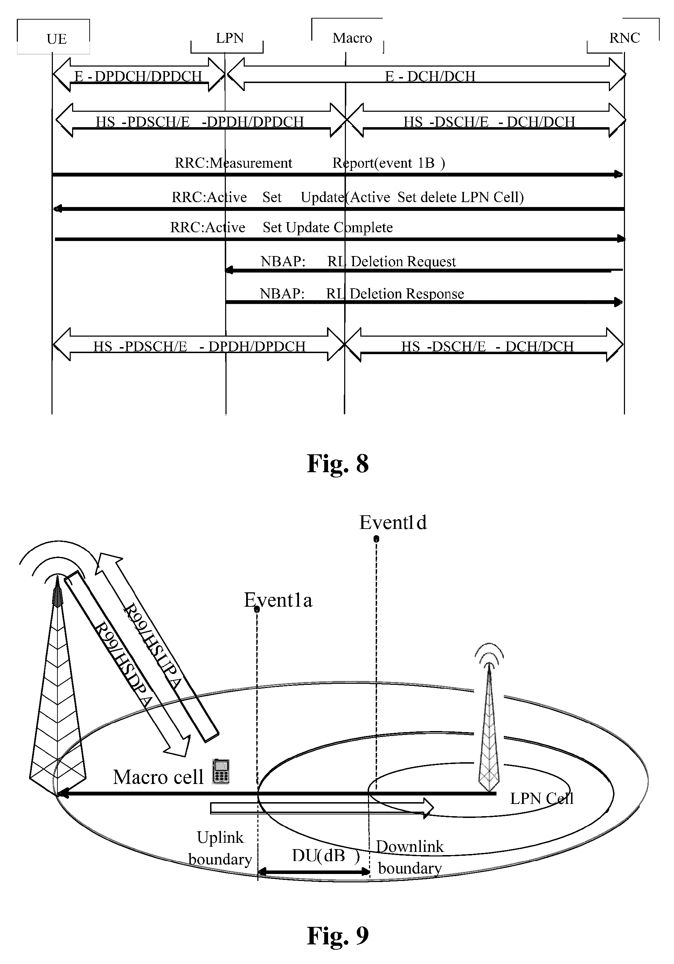

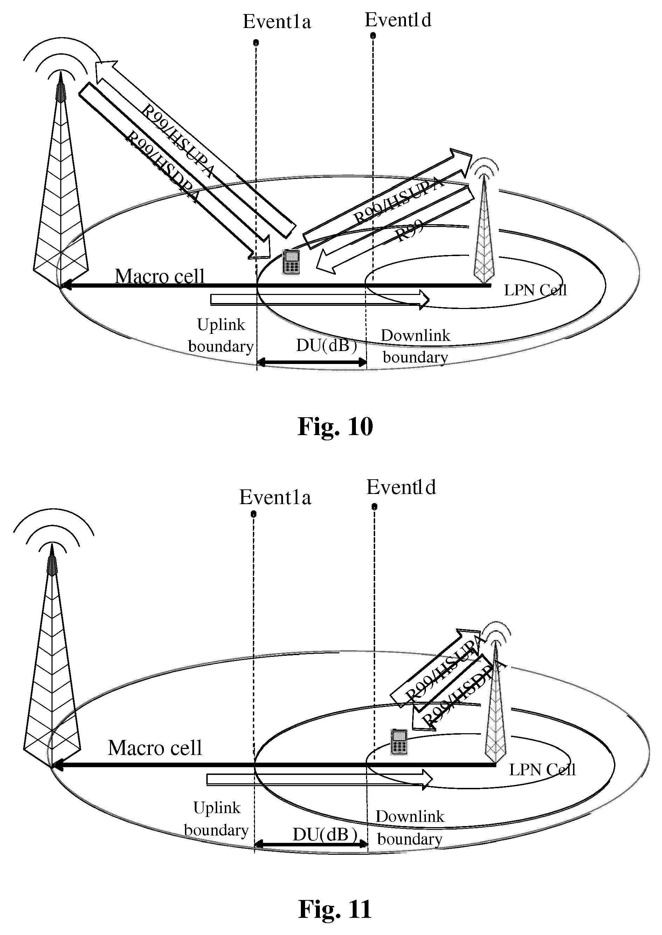

An uplink and downlink service connecting relationship in the handover procedure of movement of the UE is shown in Fig. 9, Fig. 10 and Fig. 11.

2: the UE moves from the LPN cell to the macro cell.

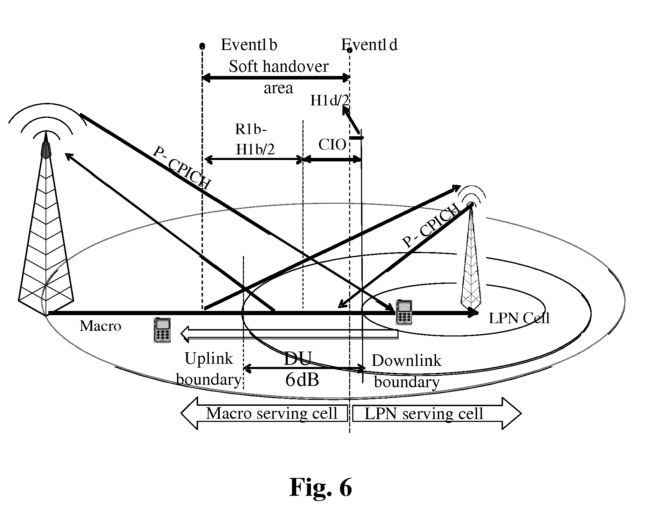

In a soft handover procedure of movement of the UE from the LPN cell to the macro cell, only MC event reports of Event1d and Event1b are generated, and the MC event report of Event1a will not be generated, referring to Fig. 6. A specific processing procedure is implemented as follows.

Step 1: a current serving cell of the UE is the LPN cell, and the RNC sends an MC message to the UE, wherein the MC message is configured in a manner as follows:

new Intra Freq Cell List in the MC message includes a CIO parameter of an adjacent cell of the macro cell, and the CIO parameter is set to be 0dB.

A use CIO parameter in the MC is set to be FALSE, and then the MC event report of Event1d of the UE is judged with reference to practical downlink signal strength quality without considering the CIO parameter;
parameter H1d in the MC message is set to be the same as soft handover parameter H1d between the macro cells, and for example, is configured to be 1~2dB (to avoid a ping-pong effect of handover); and
intra-frequency measurement reporting criteria IEs in the MC message do not include an IE of which an intra-frequency event identity is equal to 1a in, and the MC event report of Event1a is not configured in the MC message.

In addition, the intra-frequency measurement reporting criteria IEs in the MC message include an IE of which an intra-frequency event identity is equal to 1 b, and correspondingly, a reporting range constant parameter of Event1b and a delay parameter of Event1b are set to meet the following relationship:

$$R1b+H1b/2=A+(R1a-H1a/2),$$

where parameters R1a and H1a are soft handover parameters between the macro cells, A is an adjustable parameter and its value range is: 0~6, and for example, when A is 3, R1 b+H1 b/2=3+(R1a-H1a/2), where R1b=3+(R1a-H1a/2) and H1b=0(dB), or R1b=2+(R1a-H1a/2) and H1 b=2(dB).

In the embodiment, an adjustable A value is set to make it possible for the UE to stay in a macro diversity combining gain area of an uplink as much as possible to generate a macro diversity combining gain for uplink capacity in the procedure of movement of the UE from the LPN cell to the macro cell.

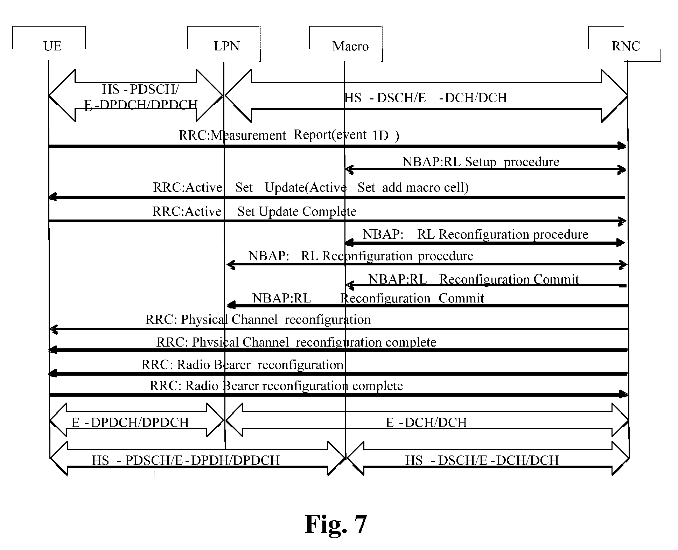

Step 2: the RNC initiates an RL setup procedure to the macro cell after receiving the MC event report of Event1d, and then the RNC initiates an active set update procedure to the UE and adds the macro cell into an active set; and the RNC implements changing of a serving cell of an HS-DSCH by initiating an RL reconfiguration procedure to the macro cell and the LPN cell and a physical channel reconfiguration procedure with the UE, and implements changing of a serving cell of an E-DCH by an RB reconfiguration procedure with the UE, so that the serving cell of the HS-DSCH is changed into the macro cell, and the serving cell of the E-DCH is changed into the macro cell, a message flowchart being shown in Fig. 7.

Step 3: the RNC initiates an active set update procedure to the UE after receiving the MC event report of Event1b, and deletes the LPN cell from the active set, and then the RNC initiates an RL deletion procedure to the LPN cell, a message flowchart being shown in Fig. 8.

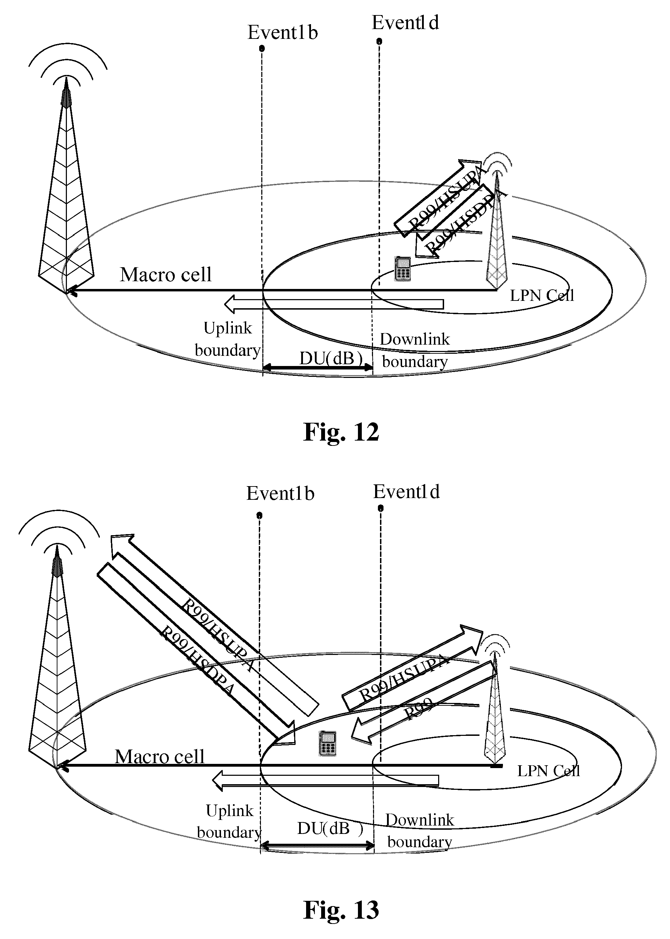

An uplink and downlink service connecting relationship in the handover procedure of movement of the UE is shown in Fig. 12, Fig. 13 and Fig. 14.

According to the solution of the embodiment, the soft handover procedure of the UE between the macro cell and the LPN cell is implemented on the basis of the two soft handover MC event reports reported by the UE, so that waste of the processing resource of the macro cell in the UMTS Hetnet can be avoided, and uplink processing performance of the network can be improved.

Compared with the related art, the embodiment of the present disclosure has the following beneficial effects:

1: waste of the processing resource of the macro cell in the UMTS Hetnet can be avoided, and the uplink processing performance of the network can be improved;
2: base band and radio frequency receiving processing resources related to an uplink physical channel such as an E-DPDCH/E-DPCCH/DPCCH/DPDCH of the macro cell are saved; base band and radio frequency transmission processing resources and output power resources related to a downlink physical control channel such as an E-HICH/E-RGCH/DPCCH/DPDCH of the macro cell are saved, and E-DCH/DCH transmission channel processing resources of the macro cell are saved; along with gradual increase of small cells, uplink and downlink resources of the macro cell can be saved more considerably, and influence on the uplink processing performance of the macro cell is also avoided; and

3: an lub (lub is a standard interface, is a logical interface between the RNC and a Node B and implements user data sending and user data and signaling processing between the RNC and the Node B, logical Operation & Maintenance (O&M) of the Node B and the like) transmission bandwidth of the macro cell is saved, and along with gradual increase of the small cells, the bandwidth can be saved more considerably, and influence on capacity configuration changing of an lub transmission network is avoided.

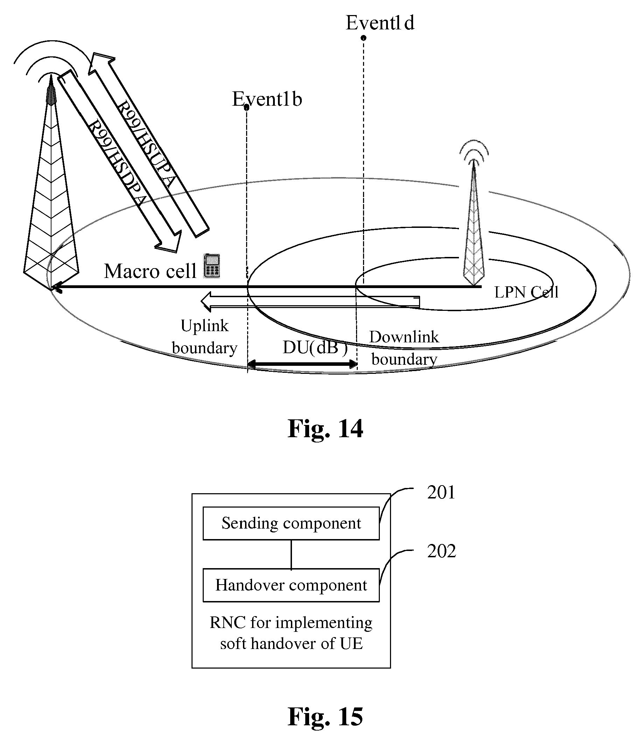

As shown in Fig. 15, an embodiment of the present disclosure discloses an RNC for implementing soft handover of UE, which includes: a sending component 201 and a handover component 202, wherein

the sending component 201 is configured to send, to the UE, an MC message for soft handover; and

the handover component 202 is configured to, during soft handover of the UE, receive two MC event reports reported by the UE according to the MC message, and perform a soft handover procedure of the UE between a macro cell and an LPN cell according to the two MC event reports.

In a UMTS Hetnet, a soft handover procedure of the UE may include: a soft handover procedure of movement of the UE from the macro cell to the LPN cell, and a soft handover procedure of movement of the UE from the LPN cell to the macro cell.

When the UE moves from the macro cell to the LPN cell, a current serving cell of the UE is the macro cell, and the MC message sent to the UE by the RNC includes a CIO parameter of an adjacent cell of the LPN cell deployed in the macro cell. When the UE moves from the LPN cell to the macro cell, a current serving cell of the UE is the LPN cell, and the MC message sent to the UE by the RNC includes a CIO parameter of an adjacent cell of the macro cell.

In order to improve uplink performance of the UMTS Hetnet, the soft handover event procedure is redefined in the embodiment, so that the RNC may implement the soft handover procedure of the UE between the macro cell and the LPN cell on the basis of the two soft handover MC event reports reported by the UE, and waste of a processing resource of the macro cell in the UMTS Hetnet may also be avoided.

For the first soft handover procedure, when the UE moves from the macro cell to the LPN cell, the process that the RNC receives the two MC event reports reported by the UE according to the MC message and performs the soft handover procedure of the UE between the macro cell and the LPN cell according to the two MC event reports is implemented as follows:

at first, the RNC receives an MC event report of Event1a reported by the UE, and after receiving the MC event report of Event1a reported by the UE, the RNC sets up an RL with the LPN cell, initiates an active set update procedure to the UE to add the LPN cell into an active set;

then, the RNC receives an MC event report of Event1d reported by the UE, and after receiving the MC event report of Event1d reported by the UE, the RNC implements changing of a serving cell of an HS-DSCH into the LPN cell by initiating an RL reconfiguration procedure to the macro cell and the LPN cell and a physical channel reconfiguration procedure with the UE, and implements changing of a serving cell of an E-DCH into the LPN cell by an RB reconfiguration procedure with the UE; and

finally, the RNC initiates the active set update procedure to the UE to delete the macro cell from the active set, and initiates an RL deletion procedure to the macro cell.

In such a manner, the soft handover procedure of the UE from the macro cell to the LPN cell is implemented.

For the second soft handover procedure, when the UE moves from the LPN cell to the macro cell, the process that the RNC receives the two MC event reports reported by the UE according to the MC message and performs the soft handover procedure of the UE between the macro cell and the LPN cell according to the two MC event reports is implemented as follows:

at first, the RNC receives the MC event report of Event1d reported by the UE, sets up an RL with the macro cell after receiving the MC event report of Event1d reported by the UE, initiates an active set update procedure to the UE to add the macro cell into an active set;

then, the RNC implements changing of a serving cell of an HS-DSCH into the macro cell by initiating an RL reconfiguration procedure to the macro cell and the LPN cell and a physical channel reconfiguration procedure with the UE, and implements changing of a serving cell of an E-DCH into the macro cell by an RB reconfiguration procedure with the UE;

next, the RNC receives an MC event report of Event1b reported by the UE, initiates an active set update procedure to the UE after receiving the MC event report of Event1b reported by the UE, and deletes the LPN cell from the active set; and finally, the RNC initiates an RL deletion procedure to the LPN cell.

In such a manner, the soft handover procedure of the UE from the LPN cell to the macro cell is implemented.

The solution of the embodiment will be elaborated below specifically with a movement procedure of UE from a macro cell to an LPN cell and a movement procedure of the UE from the LPN cell to the macro cell in detail respectively.

1: the UE moves from the macro cell to the LPN cell.

In a soft handover procedure of movement of the UE from the macro cell to the LPN cell, only MC event reports of Event1a and Event1d are generated, and an MC event report of Event1b will not be generated, referring to Fig. 3, Fig. 3 is a diagram of a soft handover event and soft handover area in a procedure of movement of UE from a macro cell to an LPN cell according to an embodiment of the present disclosure. A specific process is implemented as follows.
Step 1: a current serving cell of the UE is the macro cell, and the RNC sends an MC message to the UE, wherein the MC message is configured in a manner as follows:

newIntraFreqCellList in the MC message includes a CIO parameter of an adjacent cell of the LPN cell deployed in the macro cell, and a calculation formula for the CIO parameter is:

$$CIO=DU-(R1a-H1a/2), \text{ a unit being dB; and}$$

a unit being dB; and
in the formula, DU is a magnitude of a received signal quality difference of the UE between an uplink boundary and a downlink boundary, i.e. a size of an uplink and downlink unbalance area of the UE, and a value range of DU is 4~7dB, and is determined according to a practical transmitted power difference and receiving sensitivity difference of the macro cell and the LPN cell in a UMTS Hetnet.

In the formula, parameters R1a and H1a are soft handover parameters between cells, and in general, R1a-H1a/2<DU(dB). For example, when DU is 6dB, CIO=6-(R1a-H1a/2), and conventional Event1a has measurement report parameters R1a=3dB and H1a=0dB.
In the MC message, parameters R1a and H1a of an Information Element (IE) of which an intra-frequency event identity is equal to 1a in intra-frequency measurement reporting criteria IEs are set to be the same as soft handover parameters R1a and H1a between the macro cells respectively.
A use CIO parameter in the MC message is set to be FALSE, and then the MC event report of Event1d of the UE is judged with reference to practical downlink signal strength quality without considering the CIO parameter; and parameter H1d in the MC message is set to be the same as soft handover parameter H1d between the macro cells, and for example, is configured to be 1~2dB (to avoid a ping-pong effect of handover).
Step 2: the RNC initiates an RL setup procedure to the LPN cell after receiving the MC event report of Event1a, and then the RNC initiates an active set update procedure to the UE to add the LPN cell into an active set, a message flowchart being shown in Fig. 4.
Step 3: after receiving the MC event report of Event1d, the RNC implements changing of a serving cell of an HS-DSCH by initiating an RL reconfiguration procedure to the macro cell and the LPN cell and a physical channel reconfiguration procedure with the UE, and implements changing of a serving cell of an E-DCH by an RB reconfiguration procedure with the UE, so that the serving cell of the HS-DSCH is changed into the LPN cell, and the serving cell of the E-DCH is changed into the LPN cell; and then the RNC initiates an active set update procedure to the UE, and deletes the macro cell from the active set, so that the macro cell may be deleted from the active set in a procedure of processing Event1d, a message flowchart being shown in Fig. 5.
An uplink and downlink service connecting relationship in the handover procedure of movement of the UE is shown in Fig. 9, Fig. 10 and Fig. 11.

2: the UE moves from the LPN cell to the macro cell.

In a soft handover procedure of movement of the UE from the LPN cell to the macro cell, only MC event reports of Event1d and Event1b are generated, and the MC event report of Event1a will not be generated, referring to Fig. 6. A specific processing procedure is implemented as follows.
Step 1: a current serving cell of the UE is the LPN cell, and the RNC sends an MC message to the UE, wherein the MC message is configured in a manner as follows:

new Intra Freq Cell List in the MC message includes a CIO parameter of an adjacent cell of the macro cell, and the CIO parameter is set to be 0dB.

A use CIO parameter in the MC is set to be FALSE, and then the MC event report of Event1d of the UE is judged with reference to practical downlink signal strength quality without considering the CIO parameter; parameter H1d in the MC message is set to be the same as soft handover parameter H1d between the macro cells, and for example, is configured to be 1~2dB (to avoid a ping-pong effect of handover); and

intra-frequency measurement reporting criteria IEs in the MC message do not include an IE of which an intra-frequency event identity is equal to 1a in, and the MC event report of Event1a is not configured in the MC message.

In addition, the intra-frequency measurement reporting criteria IEs in the MC message include an IE of which an intra-frequency event identity is equal to 1 b, and correspondingly, a reporting range constant parameter of Event1b and a delay parameter of Event1b are set to meet the following relationship:

$$R1b+H1b/2=A+(R1a-H1a/2),$$

where parameters R1a and H1a are soft handover parameters between the macro cells, A is an adjustable parameter and its value range is: 0~6, and for example, when A is 3, R1 b+H1 b/2=3+(R1a-H1a/2), where R1b=3+(R1a-H1a/2) and H1b=0(dB), or R1b=2+(R1a-H1a/2) and H1 b=2(dB).

In the embodiment, an adjustable A value is set to make it possible for the UE to stay in a macro diversity combining gain area of an uplink as much as possible to generate a macro diversity combining gain for uplink capacity in the procedure of movement of the UE from the LPN cell to the macro cell.

Step 2: the RNC initiates an RL setup procedure to the macro cell after receiving the MC event report of Event1d, and then the RNC initiates an active set update procedure to the UE and adds the macro cell into an active set; and the RNC implements changing of a serving cell of an HS-DSCH by initiating an RL reconfiguration procedure to the macro cell and the LPN cell and a physical channel reconfiguration procedure with the UE, and implements changing of a serving cell of an E-DCH by an RB reconfiguration procedure with the UE, so that the serving cell of the HS-DSCH is changed into the macro cell, and the serving cell of the E-DCH is changed into the macro cell, a message flowchart being shown in Fig. 7.

Step 3: the RNC initiates an active set update procedure to the UE after receiving the MC event report of Event1b, deletes the LPN cell from the active set, and then the RNC initiates an RL deletion procedure to the LPN cell, a message flowchart being shown in Fig. 8.

An uplink and downlink service connecting relationship in the handover procedure of movement of the UE is shown in Fig. 12, Fig. 13 and Fig. 14.

According to the solution of the embodiment, the soft handover procedure of the UE between the macro cell and the LPN cell is implemented on the basis of the two soft handover MC event reports reported by the UE, so that waste of the processing resource of the macro cell in the UMTS Hetnet can be avoided, and uplink processing performance of the network can be improved.

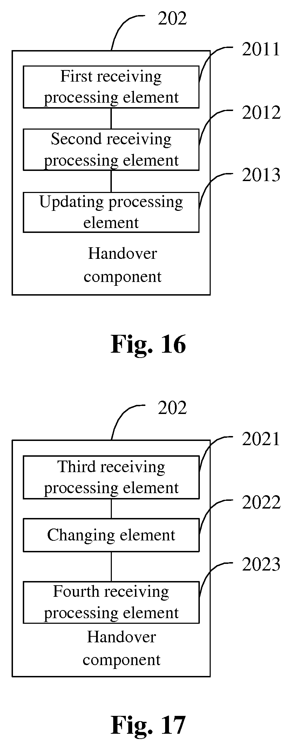

More specifically, as shown in Fig. 16, as an implementation mode, for the first soft handover procedure, the handover component 202 includes: a first receiving processing element 2011, a second receiving processing element 2012 and an updating processing element 2013, wherein

the first receiving processing element 2011 is configured to receive an MC event report of Event1a reported by the UE, and add the LPN cell into an active set;

the second receiving processing element 2012 is configured to receive an MC event report of Event1d reported by the UE, and change one or more serving cells of one or more uplink and downlink channels of the macro cell into the LPN cell; and the updating processing element 2013 is configured to initiate an active set update procedure to the UE to delete the macro cell from the active set, and delete an RL with the macro cell.

Specifically, the first receiving processing element 2011 is configured to receive the MC event report of Event1a reported by the UE, set up an RL with the LPN cell according to the MC event report of Event1a, and initiate the active set update procedure to the UE to add the LPN cell into the active set; and

the second receiving processing element 2012 is configured to receive the MC event report of Event1d reported by the UE, implement changing of a serving cell of an HS-DSCH into the LPN cell according to the MC event report of Event1d by initiating an RL reconfiguration procedure with the macro cell and the LPN cell and a physical channel reconfiguration procedure with the UE, and implement changing of a serving cell of an uplink E-DCH into the LPN cell by an RB reconfiguration procedure with the UE.

As shown in Fig. 17, as another implementation mode, for the second soft handover procedure, the handover component 202 includes: a third receiving processing element 2021, a changing element 2022 and a fourth receiving processing element 2023, wherein

the third receiving processing element 2021 is configured to receive the MC event report of Event1d reported by the UE, and add the macro cell into the active set;

the changing element 2022 is configured to change one or more serving cells of one or more uplink and downlink channels of the LPN cell into the macro cell; and

the fourth receiving processing element 2023 is configured to receive an MC event report of Event1b reported by the UE, delete the LPN cell from the active set, and initiate an RL deletion procedure to the LPN cell to delete an RL with the LPN cell.

Specifically, the third receiving processing element 2021 is configured to receive the MC event report of Event1d reported by the UE, set up an RL with the macro cell according to the MC event report of Event1d, initiate an active set update procedure to the UE to add the macro cell into the active set; and

the changing element 2022 is configured to implement changing of a serving cell of an HS-DSCH into the macro cell by initiating an RL reconfiguration procedure with the macro cell and the LPN cell and a physical channel reconfiguration procedure with the UE; and implement changing of a serving cell of an E-DCH into the macro cell by an RB reconfiguration procedure with the UE.

Compared with the related art, the embodiment of the present disclosure has the following beneficial effects:

1: waste of the processing resource of the macro cell in the UMTS Hetnet can be avoided, and the uplink processing performance of the network can be improved;

2: base band and radio frequency receiving processing resources related to an uplink physical channel such as an E-DPDCH/E-DPCCH/DPCCH/DPDCH of the macro cell are saved; base band and radio frequency transmission processing resources and output power resources related to a downlink physical control channel such as an E-HICH/E-RGCH/DPCCH/DPDCH of the macro cell are saved, and E-DCH/DCH transmission channel processing resources of the macro cell are saved; along with gradual increase of small cells, uplink and downlink resources of the macro cell can be saved more considerably, and influence on the uplink processing performance of the macro cell is also avoided; and

3: an Iub (Iub is a standard interface, is a logical interface between the RNC and a Node B and implements user data sending and user data and signaling processing between the RNC and the Node B, logical Operation & Maintenance (O&M) of the Node B and the like) transmission bandwidth of the macro cell is saved, and along with gradual increase of the small cells, the bandwidth can be saved more considerably, and influence on capacity configuration changing of an Iub transmission network is avoided.

According to the method and RNC for implementing soft handover of the UE in the embodiment of the present disclosure, the soft handover procedure of the UE between the macro cell and the LPN cell is implemented on the basis of the two soft handover MC event reports reported by the UE, so that waste of the processing resource of the macro cell in the UMTS Hetnet can be avoided, the uplink processing performance of the network can be improved. In addition, an Iub transmission bandwidth of the macro cell can also be saved. Along with gradual increase of small cells, the bandwidth can be saved more considerably, and influence on capacity configuration changing of the Iub transmission network is avoided.

The above is only the preferred embodiments of the present disclosure and thus is not intended to limit the scope of the present disclosure. All equivalent structure or flow transformations made by virtue of contents of the Specification and drawings of the present disclosure, or direct or indirect application of the contents to other related technical fields shall fall within the scope of protection defined by the appended claims of the present disclosure.

**Claims**

1. A method for implementing soft handover of User Equipment (UE), comprising:

   sending, to the UE by a Radio Network Controller (RNC), a Measurement Control (MC) message for soft handover; and
   during soft handover of the UE, receiving two MC event reports reported by the UE according to the MC message, and performing a soft handover procedure of the UE between a macro cell and a Low Power Node (LPN) cell according to the two MC event reports.

2. The method as claimed in claim 1, wherein a current serving cell of the UE is the macro cell, and the MC message sent to the UE by the RNC comprises a Cell Individual Offset (CIO) parameter of an adjacent cell of the LPN cell deployed in the macro cell.

3. The method as claimed in claim 1, wherein a current serving cell of the UE is the LPN cell, and the MC message sent to the UE by the RNC comprises a Cell Individual Offset (CIO) parameter of an adjacent cell of the macro cell.

**4.** The method as claimed in claim 2, wherein, when the UE moves from the macro cell to the LPN cell, receiving, by the RNC, the two MC event reports reported by the UE according to the MC message and performing, by the RNC, the soft handover procedure of the UE between the macro cell and the LPN cell according to the two MC event reports comprises:

> receiving, by the RNC, an MC event report of Event1a reported by the UE, and adding the LPN cell into an active set;
> receiving an MC event report of Event1d reported by the UE, and changing one or more serving cells of one or more uplink and downlink channels of the macro cell into the LPN cell; and
> initiating an active set update procedure to the UE to delete the macro cell from the active set, and deleting a Radio Link (RL) with the macro cell.

**5.** The method as claimed in claim 4, wherein receiving, by the RNC, the MC event report of Event1a reported by the UE and adding the LPN cell into the active set comprises:

> receiving, by the RNC, the MC event report of Event1a reported by the UE;
> setting up an RL with the LPN cell according to the MC event report of Event1a; and
> initiating an active set update procedure to the UE to add the LPN cell into the active set.

**6.** The method as claimed in claim 5, wherein receiving the MC event report of Event1d reported by the UE and changing one or more serving cells of one or more uplink and downlink channels of the macro cell into the LPN cell comprises:

> receiving the MC event report of Event1d reported by the UE;
> implementing changing of a serving cell of a High Speed-Downlink Shared Channel (HS-DSCH) into the LPN cell according to the MC event report of Event1d by initiating an RL reconfiguration procedure with the macro cell and the LPN cell and a physical channel reconfiguration procedure with the UE; and implementing changing of a serving cell of an uplink Enhanced Dedicated Channel (E-DCH) into the LPN cell by a Radio Bearer (RB) reconfiguration procedure with the UE.

**7.** The method as claimed in claim 2, wherein, when the UE moves from the LPN cell to the macro cell, receiving, by the RNC, the two MC event reports reported by the UE according to the MC message and performing the soft handover procedure of the UE between the macro cell and the LPN cell according to the two MC event reports comprises:

> receiving, by the RNC, the MC event report of Event1d reported by the UE, and adding the macro cell into an active set;
> changing one or more serving cells of one or more uplink and downlink channels of the LPN cell into the macro cell; and
> receiving an MC event report of Event1b reported by the UE, deleting the LPN cell from the active set, and deleting an RL with the LPN cell.

**8.** The method as claimed in claim 7, wherein receiving, by the RNC, the MC event report of Event1d reported by the UE and adding the macro cell into the active set comprises:

> receiving, by the RNC, the MC event report of Event1d reported by the UE;
> setting up an RL with the macro cell according to the MC event report of Event1d; and
> initiating an active set update procedure to the UE to add the macro cell into the active set.

**9.** The method as claimed in claim 8, wherein changing the one or more serving cells of one or more uplink and downlink channels of the LPN cell into the macro cell comprises:

> implementing, by the RNC, changing of a serving cell of an HS-DSCH into the macro cell by initiating an RL reconfiguration procedure with the macro cell and the LPN cell and a physical channel reconfiguration procedure with the UE; and implementing changing of a serving cell of an E-DCH into the macro cell by an RB reconfiguration procedure with the UE.

**10.** A Radio Network Controller (RNC) for implementing soft handover of User Equipment (UE), comprising:

a sending component, configured to send, to the UE, a Measurement Control (MC) message for soft handover; and

a handover component, configured to, during soft handover of the UE, receive two MC event reports reported by the UE according to the MC message, and perform a soft handover procedure of the UE between a macro cell and a Low Power Node (LPN) cell according to the two MC event reports.

11. The RNC as claimed in claim 10, wherein a current serving cell of the UE is the macro cell, and the MC message sent to the UE by the RNC comprises a Cell Individual Offset (CIO) parameter of an adjacent cell of the LPN cell deployed in the macro cell.

12. The RNC as claimed in claim 10, wherein a current serving cell of the UE is the LPN cell, and the MC message sent to the UE by the RNC comprises a CIO parameter of an adjacent cell of the macro cell.

13. The RNC as claimed in claim 11, wherein the handover component comprises:

a first receiving processing element, configured to receive an MC event report of Event1a reported by the UE, and add the LPN cell into an active set;

a second receiving processing element, configured to receive an MC event report of Event1d reported by the UE, and change one or more serving cells of one or more uplink and downlink channels of the macro cell into the LPN cell; and

an updating processing element, configured to initiate an active set update procedure to the UE to delete the macro cell from the active set, and delete a Radio Link (RL) with the macro cell.

14. The RNC as claimed in claim 13, wherein the first receiving processing element is further configured to receive the MC event report of Event1a reported by the UE; set up an RL with the LPN cell according to the MC event report of Event1a; and initiate an active set update procedure to the UE to add the LPN cell into the active set.

15. The RNC as claimed in claim 14, wherein the second receiving processing element is further configured to receive the MC event report of Event1d reported by the UE; implement changing of a serving cell of a High Speed-Downlink Shared Channel (HS-DSCH) into the LPN cell according to the MC event report of Event1d by initiating an RL reconfiguration procedure with the macro cell and the LPN cell and a physical channel reconfiguration procedure with the UE; and implement changing of a serving cell of an uplink Enhanced Dedicated Channel (E-DCH) into the LPN cell by a Radio Bearer (RB) reconfiguration procedure with the UE.

16. The RNC as claimed in claim 12, wherein the handover component comprises:

a third receiving processing element, configured to receive the MC event report of Event1d reported by the UE, and add the macro cell into an active set;

a changing element, configured to change one or more serving cells of one or more uplink and downlink channels of the LPN cell into the macro cell; and

a fourth receiving processing element, configured to receive an MC event report of Event1b reported by the UE, delete the LPN cell from the active set, and delete an RL with the LPN cell.

17. The RNC as claimed in claim 16, wherein the third receiving processing element is further configured to receive the MC event report of Event1d reported by the UE; set up an RL with the macro cell according to the MC event report of Event1d; and initiate an active set update procedure to the UE to add the macro cell into the active set.

18. The RNC as claimed in claim 17, wherein the changing element is further configured to implement changing of a serving cell of an HS-DSCH into the macro cell by initiating an RL reconfiguration procedure with the macro cell and the LPN cell and a physical channel reconfiguration procedure with the UE; and implement changing of a serving cell of an E-DCH into the macro cell by an RB reconfiguration procedure with the UE.

A macro Node B and an LPN cell have the same carrier and
equal receiving sensitivity

Fig. 1a

A macro cell receives and processes a poorer uplink
channel signal in a soft handover area, which may cause
waste of an uplink processing resource of the macro cell

Fig. 1b

Start

An RNC sends an MC message for soft handover to the UE — S101

During soft handover of the UE, the RNC receives two MC event reports reported by the UE according to the MC message, and performs a soft handover procedure of the UE between a macro cell and an LPN cell according to the two MC event reports — S102

End

**Fig. 2**

Event1a          Event1d

Soft handover area

H1d/2

R1a_ H1a/2          CIO

P-CPICH

P-CPICH

Macro

LPN Cell

Uplink boundary          DU          Downlink boundary

6dB

Macro serving cell | LPN serving cell

**Fig. 3**

UE | LPN | Macro | RNC

HS -PDSCH/E - DPDH/DPDCH | HS -DSCH/E-DCH/DCH

RRC: Measurement Report (Event 1a )

NBAP : RL Setup Request

NBAP : RL Setup Response

RRC:Active Set Update | ( Active Set add LPN Cell )

RRC: Active Set Update Complete

E- DPDH/DPDCH | E - DCH/DCH

HS - PDSCH/E-DPDH/DPDCH | HS- DSCH/E-DCH/DCH

## Fig. 4

UE | LPN | Macro | RNC

E - DPDCH/DPDCH | E - DCH/DCH

HS - PDSCH/E - DPDH/DPDCH | HS - DSCH/E - DCH/DCH

RRC:Measurement Report(event 1D )

NBAP: RL Reconfiguration Prepare

NBAP: RL Reconfiguration Prepare

NBAP: RL Reconfiguration Commit

NBAP: RL Reconfiguration Commit

RRC: Physical Channel reconfiguration

RRC: Physical Channel reconfiguration complete

RRC: Radio Bearer reconfiguration

RRC: Radio Bearer reconfiguration complete

RRC:Active Set Update(Active Set delet macro cell)

RRC:Active Set Update Complete

NBAP: RL Deletion Request

NBAP: RL Deletion Response

HS -PDSCH/ E -DPDCH/DPDCH | HS -DSCH/E -DCH/DCH

## Fig. 5

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

## INTERNATIONAL SEARCH REPORT

| | International application No. |
|---|---|
| | PCT/CN2014/080131 |

### A. CLASSIFICATION OF SUBJECT MATTER

H04W 48/08 (2009.01) i

According to International Patent Classification (IPC) or to both national classification and IPC

### B. FIELDS SEARCHED

Minimum documentation searched (classification system followed by classification symbols)

IPC: H04Q; H04W; H04L

Documentation searched other than minimum documentation to the extent that such documents are included in the fields searched

Electronic data base consulted during the international search (name of data base and, where practicable, search terms used)

CNABS, CNTXT, CNKI, VEN: low w power w cell, macro w power w cell, rnc, ue, soft w handoff, control

### C. DOCUMENTS CONSIDERED TO BE RELEVANT

| Category* | Citation of document, with indication, where appropriate, of the relevant passages | Relevant to claim No. |
|---|---|---|
| X | CN 1949916 A (ZTE CORP.) 18 April 2007 (18.04.2007) description, page 4, line 8 to page 5, line 15, and the abstract | 1-3, 10-12 |
| A | CN 1949916 A (ZTE CORP.) 18 April 2007 (18.04.2007) the whole document | 4-9, 13-18 |
| A | CN 1428952 A (SHANGHAI NO2 RES INST SHENZHEN ZHONGXING) 09 July 2003 (09.07.2003) the whole document | 1-18 |
| A | CN 103096398 A (HUAWEI TECHNOLOGIES CO., LTD.) 08 May 2013 (08.05.2013) the whole document | 1-18 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 September 2014 | 29 September 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer YIN,Yue Telephone No. (86-10) 62089467 |
|---|---|

Form PCT/ISA /210 (second sheet) (July 2009)

INTERNATIONAL SEARCH REPORT

Information on patent family members

International application No.

PCT/CN2014/080131

| Patent Documents referred in the Report | Publication Date | Patent Family | Publication Date |
|---|---|---|---|
| CN 1949916 A | 18 April 2007 | CN 1949916 B | 23 June 2010 |
| CN 1428952 A | 09 July 2003 | CN 100463559 C | 18 February 2009 |
| CN 103096398 A | 08 May 2013 | WO 2013067951 A1 | 16 May 2013 |
| | | EP 2770777 A1 | 27 August 2014 |
| | | US 2014242994 A1 | 28 August 2014 |

Form PCT/ISA /210 (patent family annex) (July 2009)